# EUROPÄISCHE PATENTSCHRIFT

(11) **EP 1 428 092 B1**
(45) Veröffentlichungstag und Bekanntmachung des Hinweises auf die Patenterteilung: **29.12.2010**
(21) Anmeldenummer: 02797980.6
(22) Anmeldetag: 10.09.2002
(51) Int. Cl.: G05D 23/19, F25D 31/00, F25D 29/00

(54) **KÜHLGERÄT**
REFRIGERATION DEVICE
APPAREIL REFRIGERANT

(30) Priorität: 13.09.2001 DE 10145146
(43) Veröffentlichungstag der Anmeldung: 16.06.2004
(73) Patentinhaber: BSH Bosch und Siemens Hausgeräte GmbH, 81739 München (DE)
(72) Erfinder: ATHANASIOU, Athanasios, 89537 Giengen (DE); MAYERSHOFER, Christian, 89355 Grundremmingen (DE)
(74) Vertreter: Thoma, Lorenz
(86) Internationale Anmeldenummer: PCT/EP2002/010146
(87) Internationale Veröffentlichungsnummer: WO 2003/023542

(56) Entgegenhaltungen:
- FR-A- 2 759 774
- US-A- 3 709 289
- US-A- 4 490 982
- US-A- 4 784 212
- US-A- 5 343 712

## Beschreibung

Die vorliegende Erfindung betrifft ein Kühlgerät, das besonders zum Kühlen von Lebensmitteln geeignet ist, deren Qualität kritisch von den klimatischen Bedingungen ihrer Lagerung abhängt, wie insbesondere Wein. Die langfristige Lagerung von Weinen findet üblicherweise in Kellern statt, deren Temperatur im allgemeinen von der optimalen Trinktemperatur der Weine verschieden ist. Bei vielen Weißweinen und Sekt ist die optimale Trinktemperatur meist niedriger als die Kellertemperatur, während sie bei Rotweinen höher sein kann. Um die Weine auf Trinktemperatur zu bringen, werden diese häufig zum Abkühlen in einen Kühlschrank gesteckt, wo sie abrupt auf dessen Innentemperatur heruntergekühlt werden, oder sie werden in einen bewohnten Raum gebracht, wo sie sich auf dessen Temperatur erwärmen können. Derartige abrupte Temperaturänderungen sind genau das, was man bei der langfristigen Lagerung der Weine in Kellern zu vermeiden versucht, und sie können deren Qualität negativ beeinflussen.

Dokument US 5,343,712 A1 offenbart ein Kühlschrank mit einer Regelvorrichtung zur stufenweisen Regelung der Temperatur eines Innenraumes bis zur Zieltemperatur.

Aufgabe der vorliegenden Erfindung ist, ein Kühlgerät anzugeben, mit dem Weine schonend und ohne Qualitätseinbuße auf ihre optimale Genußtemperatur gebracht werden können.

Die Aufgabe wird gelöst durch ein Kühlgerät mit den Merkmalen des Anspruches 1. Während Kühlgeräte herkömmlicherweise nur eingerichtet sind, um eine von einem Benutzer vorwählbare Temperatur in ihrem Innenraum konstant aufrecht zu erhalten, ist das erfindungsgemäße Kühlgerät mit Hilfe seines Steuergliedes in der Lage, in seinem Innenraum eine mit vorgegebenem Verlauf zeitlich veränderliche Temperatur zu erzeugen, die ein schonendes Erwärmen oder Abkühlen der Weine ermöglicht.

Vorzugsweise ist der Verlauf so definiert, daß er eine Temperaturänderung mit im Mittel konstanter Geschwindigkeit bis zum Erreichen einer Endtemperatur steuert, wobei die Endtemperatur der optimalen Genußtemperatur der Weine entsprechen sollte.

Der vorgegebene Verlauf kann in eine Mehrzahl von Stufen unterteilt sein, die nacheinander durchlaufen werden, wobei im Laufe einer Stufe der Pegel des Sollwertsignals und damit die dadurch repräsentierte Solltemperatur konstant bleiben.

Die End-Solltemperatur, die am Ende des Verlaufs erreicht wird, ist zweckmäßigerweise durch einen Benutzer einstellbar, so daß dieser sie passend zur jeweiligen Weinsorte bzw. entsprechend seinen persönlichen Vorlieben vorgeben kann.

Zweckmäßigerweise ist auch eine mittlere Änderungsgeschwindigkeit der Solltemperatur während des Verlaufes durch einen Benutzer spezifizierbar, so daß dieser innerhalb einer zur Verfügung stehenden Zeitspanne einen möglich schonenden Verlauf der Temperierung einstellen kann. Das Spezifizieren der mittleren Änderungsgeschwindigkeit kann direkt durch Eingeben eines Zahlenwertes für die Änderungsgeschwindigkeit erfolgen; denkbar ist auch, daß der Benutzer eine für den Temperiervorgang zur Verfügung stehende Zeitspanne spezifiziert, wobei das Kühlgerät dann die erforderliche mittlere Änderungsgeschwindigkeit selbsttätig berechnet.

Die Änderungsgeschwindigkeit kann zwischen 0,5 und 3 K/h betragen.

Weitere Merkmale und Vorteile der Erfindung ergeben sich aus der nachfolgenden Beschreibung eines Ausführungsbeispiels mit Bezug auf die beigefügten Figuren. Es zeigen:
Figur 1 ein Blockdiagramm eines erfindungsgemäßen Kühlgerätes; und
Figur 2 ein Beispiel für den zeitlichen Verlauf der Soll-Temperatur und der resultierenden tatsächlichen Temperatur des Innenraumes des Kühlgerätes.

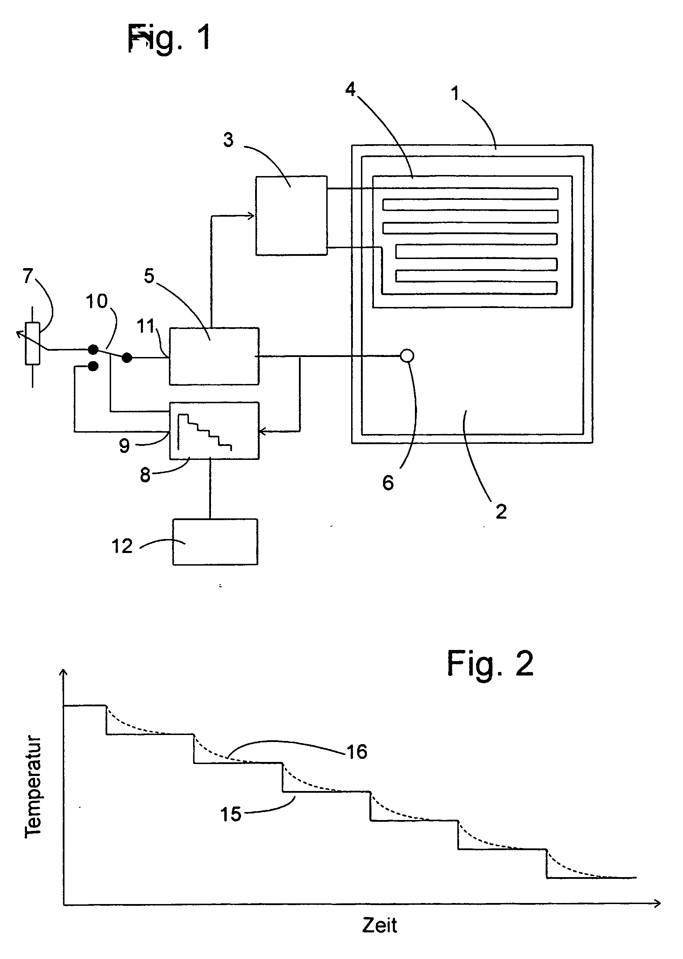

Das schematisch in Figur 1 dargestellte Kühlgerät umfaßt ein Gehäuse 1, welches einen Innenraum 2 umschließt, eine Kältemaschine 3 mit einem an einer Innenwand des Gehäuses 1 angebrachten Verdampfer 4 zum Kühlen des Innenraumes 2 und einer Thermostat-Regelvorrichtung 5 zum Steuern des Betriebes der Kältemaschine 3 anhand einer von einem Temperatursensor 6 im Innenraum 2 erfaßten Temperatur. Ein Regler 7, an dem ein Benutzer eine Soll-Temperatur des Innenraumes 2 einstellen kann, ist mit der Regelvorrichtung 5 verbunden. Dieser Aufbau eines Kühlgerätes ist allgemein bekannt, so daß seine Funktionsweise hier nicht weiter erläutert werden muß.

Ein Steuerglied 8 hat einen Signaleingang, der mit dem Temperatursensor 6 verbunden ist. Ein Sollwertsignalausgang 9 des Steuergliedes 8 ist über einen Schalter 10 anstelle des Reglers 7 mit dem Sollwertsignaleingang 11 der Regelvorrichtung 5 verbindbar. In der dargestellten Stellung des Schalters 10 verbindet dieser den Sollwertsignaleingang 11 mit dem Regler 7; dies entspricht einem Betriebszustand des Kühlgerätes, in dem dieses in herkömmlicher Weise eine vom Benutzer am Regler 7 eingestellte Solltemperatur im Innenraum 2 konstant aufrecht erhält.

Das Steuerglied 8 ist mit einer Benutzerschnittstelle 12 verbunden, an der ein Benutzer zum Beispiel einen Befehl zum Umschalten vom Betrieb mit konstanter Innenraumtemperatur auf Temperierbetrieb eingeben kann. Wenn ein solcher Befehl eingegeben wird, schaltet das Steuerglied 8 den Schalter 10 um, so daß der Sollwertsignaleingang 11 der Regelvorrichtung mit dem Sollwertsignalausgang 9 des Steuergliedes 8 verbunden wird. Das Steuerglied 8 beginnt nun, ein Sollwertsignal mit einem zeitlichen Verlauf auszugeben, der einer vorgegebenen Änderungsgeschwindigkeit der Innenraumtemperatur und einer vorgegebenen Endtemperatur entspricht. Die Änderungsgeschwindigkeit kann z.B. 1 K/h betragen. Zunächst liefert das Steuerglied 8 ein Sollwertsignal, das einer Solltemperatur entspricht, die um eine vorgegebene Schrittweite von z.B. 0,1 K unterhalb der vom Temperatursensor 6 erfaßten Innenraumtemperatur liegt, und die Regelvorrichtung 5 steuert die Kältemaschine 3 an, um diese Solltemperatur zu erreichen. Nach einer durch die Schrittweite und die Temperaturänderungsgeschwindigkeit vorgegebene Zeitspanne von hier 6 Minuten reduziert das Steuerglied 8 das Sollwertsignal erneut um 0,1 K. Der Verlauf des Sollwertsignals ist in Figur 2 als durchgezogene Linie 15 dargestellt; die resultierende Innenraumtemperatur entspricht der gestrichelten Kurve 16.

Die stufenweise Reduzierung der Temperatur wird fortgesetzt, bis eine vorgegebene Endtemperatur erreicht ist; auf dieser wird der Innenraum 2 konstant gehalten, bis ein Benutzer, insbesondere nach Entnahme des temperierten Weines aus dem Innenraum, einen Befehl zum Zurückkehren in den Betriebszustand mit der am Regler 7 eingestellten Temperatur eingibt.

Die am Regler 7 eingestellte Temperatur entspricht zweckmäßigerweise der Temperatur des Kellers, aus dem die in dem Kühlgerät zu temperierenden Weinflaschen geholt werden. Diese Temperatur kann vom Benutzer im Keller gemessen und am Regler 7 von Hand eingestellt werden; denkbar ist aber auch, den Regler 7 durch einen direkt im Keller angeordneten Temperatursensor zu ersetzen. Da das Kältegerät im allgemeinen nicht in dem gleichen Keller untergebracht sein wird, in dem auch der Wein gelagert ist, ist es zweckmäßig, zur Übertragung des Temperaturmeßwertes z.B. eine Funkstrecke vorzusehen.

Bei dem obigen Funktionsbeispiel wurde davon ausgegangen, daß eine Temperaturänderungsgeschwindigkeit und eine Endtemperatur am Steuerglied 8 vorgegeben sind. Diese Vorgabe kann bereits werksseitig erfolgen; zweckmäßiger ist jedoch, insbesondere im Falle der Endtemperatur, daß diese vom Benutzer an der Schnittstelle 12 eingegeben werden kann und vorzugsweise, um wiederholte Temperiervorgänge mit dem gleichen Temperaturverlauf ohne Wiederholen des Einstellvorgangs durchführen zu können, am Steuerglied 8 speicherbar ist.

Auch die Änderungsgeschwindigkeit der Temperatur kann durch einen Benutzer an der Schnittstelle 12 spezifizierbar sein, z.B. durch unmittelbare Eingabe eines Zahlenwertes für die Änderungsgeschwindigkeit oder durch Eingeben einer für den Temperiervorgang zur Verfügung stehenden Zeitspanne, aus der das Steuerglied 8 die erforderliche Änderungsgeschwindigkeit selbsttätig berechnet.

Ein (in der Figur nicht dargestelltes) Anzeigeelement, insbesondere ein Leuchtanzeigeelement, kann vorgesehen werden, um einem Benutzer anzuzeigen, daß der vorgegebene Temperaturverlauf abgearbeitet und die Endtemperatur erreicht ist. Ein solches Anzeigeelement hat zum einen die Funktion, dem Benutzer augenfällig kund zu tun, daß der im Kühlgerät gelagerte Wein die optimale Genußtemperatur erreicht hat und entnommen werden kann, zum anderen kann es ihn nach der Entnahme des Weines daran erinnern, daß er einen Befehl zum Zurückkehren in die Konstanttemperatur-Betriebsart eingibt, in der das Kühlgerät den Innenraum wieder auf die Kellertemperatur einstellt, so daß es erneut beladen werden kann.

Es liegt auf der Hand, daß das erfindungsgemäße Kältegerät auch eine Mehrzahl von Innenräumen aufweisen kann, die unabhängig voneinander in ihrer Temperatur regelbar sind, um so in einem Gerät unterschiedliche Weinsorten angemessen temperieren zu können.

Anstatt zum behutsamen Abkühlen, wie in Figur 2 dargestellt, kann das Kühlgerät selbstverständlich auch zum behutsamen Erwärmen eingesetzt werden, wobei es in diesem Fall zweckmäßig sein kann, den Innenraum zusätzlich mit einer Heizeinrichtung auszurüsten, da anderenfalls infolge der üblicherweise vorhandenen thermischen Isolierung des Innenraumes der Temperiervorgang vor allem in seiner Schlußphase, wenn die Temperaturdifferenz zwischen der Innenraumtemperatur und der Umgebungstemperatur des Kühlgerätes immer geringer wird, sehr lange dauern kann.

## Patentansprüche

1. Kühlgerät mit einem wenigstens einen Innenraum (2) umschließenden Gehäuse (1), einer Kältemaschine (3) zum Kühlen des Innenraums und einer Regelvorrichtung (5) zum Empfangen eines Sollwertsignals und zum Regeln der Temperatur des Innenraums (2) auf eine durch ein Sollwertsignal repräsentierte Solltemperatur durch Steuern des Betriebs der Kältemaschine (3), **gekennzeichnet durch** ein Steuerglied (8), die das Sollwertsignal mit einem nach einem vorgegebenen Verlauf (15) veränderlichen Pegel an die Regelvorrichtung (5) liefert, wobei eine mittlere Änderungsgeschwindigkeit der Solltemperatur während des Verlaufes **durch** einen Benutzer spezifizierbar ist.

2. Kühlgerät nach Anspruch 1, **dadurch gekennzeichnet, dass** der Verlauf (15) eine monotone Abnahme oder Zunahme der Solltemperatur steuert.

3. Kühlgerät nach Anspruch 2, **dadurch gekennzeichnet, dass** der Verlauf (15) eine Temperaturänderung mit im Mittel konstanter Geschwindigkeit bis zu einer Endtemperatur steuert.

4. Kühlgerät nach einem der vorhergehenden Ansprüche, **dadurch gekennzeichnet, dass** der vorgegebene Verlauf (15) eine Mehrzahl von Stufen mit während einer Stufe jeweils gleichbleibendem Pegel umfasst.

5. Kühlgerät nach einem der vorhergehenden Ansprüche, **gekennzeichnet durch** ein Bedienelement (12) zum Spezifizieren einer End-Solltemperatur am Ende des Verlaufs **durch** einen Benutzer.

6. Kühlgerät nach einem der vorhergehenden Ansprüche, **gekennzeichnet durch** ein Bedienelement (12) zum Spezifizieren einer mittleren Änderungsgeschwindigkeit der Solltemperatur während des Verlaufs **durch** einen Benutzer.

7. Kühlgerät nach Anspruch 3 oder Anspruch 6, dass die Geschwindigkeit zwischen 0,5 und 3 K/h beträgt.

8. Kühlgerät nach einem der vorhergehenden Ansprüche, **gekennzeichnet durch** ein Anzeigeelement zum Anzeigen des Erreichens des Endes des vorgegebenen Verlaufs.

## Claims

1. Cooling appliance with a housing (1) enclosing at least one interior space (2), a refrigerating machine (3) for cooling the interior space and a regulating device (5) for receiving a target value signal and for regulating the temperature of the interior space (2) to a target temperature, which is represented by a target value signal, by controlling the operation of the refrigerating machine (3), **characterised by** a control element (8) which supplies to the regulating device (5) the target value signal at a level variable in accordance with a predetermined course (15), wherein a mean rate of change of the target temperature during the course can be specified by a user.

2. Cooling appliance according to claim 1, **characterised in that** the course (15) controls a monotonic decrease or increase in the target temperature.

3. Cooling appliance according to claim 2, **characterised in that** the course (15) controls a temperature change at a rate, which is constant on average, until a final temperature.

4. Cooling appliance according to any one of the preceding claims, **characterised in that** the predetermined course (15) comprises a plurality of steps with a constant level during each step.

5. Cooling appliance according to any one of the preceding claims, **characterised by** a control element (12) for specifying, by a user, an end target temperature at the end of the course.

6. Cooling appliance according to any one of the preceding claims, **characterised by** a control element (12) for specifying, by a user, a mean rate of change of the target temperature during the course.

7. Cooling appliance according to claim 3 or claim 6, **characterised in that** the rate is between 0.5 and 3 K/h.

8. Cooling appliance according to any one of the preceding claims, **characterised by** an indicating element for indicating attainment of the end of the predetermined course.

## Revendications

1. Appareil réfrigérant comprenant au moins un boîtier (1) entourant un espace intérieur (2), une machine frigorifique (3) pour le refroidissement de l'espace intérieur et un dispositif de régulation (5) destiné à recevoir un signal de valeur de consigne et à régler la température de l'espace intérieur (2) à une température de consigne représentée par un signal de valeur de consigne par commande du fonctionnement de la machine frigorifique (3), **caractérisé par** un organe de commande (8) qui fournit au dispositif de régulation (5) le signal de valeur de consigne avec un niveau changeant selon une courbe prédéfinie, une vitesse de changement moyenne de la température de consigne pouvant être spécifiée pendant la courbe par un utilisateur.

2. Appareil réfrigérant selon la revendication 1, **caractérisé en ce que** la courbe (15) commande une diminution ou une augmentation monotone de la température de consigne.

3. Appareil réfrigérant selon la revendication 2, **caractérisé en ce que** la courbe (15) commande un changement de température jusqu'à une température finale avec une vitesse en moyenne constante.

4. Appareil réfrigérant selon la revendication 1, **caractérisé en ce que** la courbe prédéfinie (15) comprend une pluralité d'échelons ayant un niveau respectivement constant pendant un échelon.

5. Appareil réfrigérant selon l'une quelconque des revendications précédentes, **caractérisé par** un élément de commande (12) destiné à spécifier une température de consigne finale à la fin de la courbe par un utilisateur.

6. Appareil réfrigérant selon l'une quelconque des revendications précédentes, **caractérisé par** un élément de commande (12) destiné à spécifier une vitesse de changement moyenne de la température de consigne pendant la courbe par un utilisateur.

7. Appareil réfrigérant selon la revendication 3 ou la revendication 6, **caractérisé en ce que** la vitesse est comprise entre 0,5 et 3 K/h.

8. Appareil réfrigérant selon l'une quelconque des revendications précédentes, **caractérisé par** un élément d'affichage destiné à afficher l'arrivée à la fin de la courbe prédéfinie.
